# EUROPÄISCHE PATENTSCHRIFT

(11) **EP 0 534 280 B1**
(45) Veröffentlichungstag und Bekanntmachung des Hinweises auf die Patenterteilung: **24.01.1996**
(21) Anmeldenummer: 92115745.9
(22) Anmeldetag: 15.09.1992
(51) Int. Cl.: H05B 41/36, H05B 41/29

(54) **Vorschaltgerät zum Starten und Betreiben von Hochdruck-Gasentladungslampen**
Ballast for starting and operating high-pressure electric discharge lamps
Ballast pour faire démarrer et mettre en service des lampes de décharge à gaz à haute pression

(30) Priorität: 21.09.1991 DE 4131528
(43) Veröffentlichungstag der Anmeldung: 31.03.1993
(73) Patentinhaber: Hella KG Hueck & Co., D-59552 Lippstadt (DE)
(72) Erfinder: Daub, Wolfgang, W-4780 Lippstadt (DE)

(56) Entgegenhaltungen:
- DE-A- 4 015 398

## Beschreibung

Die Erfindung betrifft ein Vorschaltgerät zum Starten und Betreiben von Hochdruck-Gasentladungslampen, das aus einer Batterie gespeist wird, mit mindestens einem strom- oder leistungsgeregelten Spannungswandler, der über eine Zündeinrichtung mit einer Hochdruck-Gasentladungslampe verbunden ist und der über einen Eingang mit einer Strom-/Leistungssteuerung verbunden ist, an dem ein der Lampenspannung entsprechendes Eingangssignal anliegt, mit einem Ausgang an der Strom-/Leistungssteuerung, über den dem Spannungswandler ein Strom-/Leistungssollwert zugeführt wird, mit einem Komparator, der in Abhängigkeit von dem Eingangssignal ein Schaltsignal erzeugt und mit einem Kondensator, der in Abhängigkeit von dem erzeugten Schaltsignal, mit einer ersten Zeitkonstanten geladen oder mit einer zweiten Zeitkonstanten entladen wird und dessen Spannung, die Höhe und die Dauer einer der Hochdruck-GasentladungsLampe zugeführten Zusatzleistung nach dem Zünden bestimmt, die von dem Betriebszustand der Hochdruck-Gasentladungslampe abhängt und von deren maximal zulässigem Lampenstrom begrenzt ist.

Aus der nicht vorveröffentlichten deutschen Patentanmeldung DE-A/40 15 398 ist ein Vorschaltgerät zum Starten und Betreiben von Hochdruck-Gasentladungslampen bekannt, bei dem das Vorschaltgerät aus der Batterie eines Kraftfahrzeugs gespeist wird. Das bekannte Vorschaltgerät weist einen strom- und Leistungsgeregelten Spannungswandler auf, der als ein Wechselrichter ausgebildet ist und aus der von der Fahrzeugbatterie anliegenden Gleichspannung eine Wechselspannung erzeugt. Der Spannungswandler ist über eine Zündeinrichtung mit einer Hochdruck-Gasentladungslampe verbunden. Zur Regelung des der Hochdruck-Gasentladungslampe zugeführten maximal zulässigen Stroms und der Leistung ist der Spannungswandler mit einer Strom-/Leistungssteuerung verbunden. Zudem weist die Strom-/Leistungssteuerung einen Ausgang auf, über den dem Spannungswandler ein Strom-/Leistungssollwert zugeführt wird. Damit nach dem Zünden der Hochdruck-Gasentladungslampe diese zuverlässig und möglichst schnell in einen sicheren Brennzustand gelangt, weist die Strom-/Leistungssteuerung eine Schaltungsanordnung auf, durch die der Hochdruck-Gasentladungslampe direkt nach dem Zünden eine Zusatzleistung von dem Spannungswandler zugeführt wird, die von dem jeweiligen Betriebszustand der Hochdruck-Gasentladungslampe abhängt und von deren maximal zulässigem Lampenstrom begrenzt ist. Hierzu weist die bekannte Schaltungsanordnung einen Komparator auf, der in Abhängigkeit vom Ladezustand eines ersten Kondensators ein Schaltsignal erzeugt und weist die bekannte Schaltungsanordnung einen zweiten Kondensator auf, der in Abhängigkeit von dem erzeugten Schaltsignal mit einer ersten Zeitkonstanten aufgeladen wird oder mit einer zweiten Zeitkonstanten entladen wird, wobei die Spannung des Kondensators die Höhe und die Dauer der der Hochdruck-Gasentladungslampe zugeführten Zusatzleistung bestimmt. Der erste Kondensator wird mit einer dritten Zeitkonstanten aufgeladen und auch wieder entladen, welche die Zeit bestimmt, für die der zweite Kondensator nicht entladen wird.

Bei dem bekannten Vorschaltgerät zum Starten und Betreiben von Hochdruck-Gasentladungslampen erweist sich als nachteilig, daß die Schaltungsanordnung der Strom-/Leistungssteuerung, die bestimmt, über welche Dauer und mit welcher Höhe der Hochdruck-Gasentladungslampe eine Zusatzleistung zugeführt wird, aufwendig aufgebaut ist und somit bei der Herstellung hohe Kosten erzeugt. Bei der bekannten Schaltungsanordnung in dem Vorschaltgerät werden zur Bestimmung der Zusatzleistung zwei Kondensatoren, die beschaltet mit Widerständen unterschiedliche Zeitkonstanten für deren Auf- und Entladung aufweisen, drei Operationsverstärker und zwei Schalteinrichtungen verwendet. Zudem erweist sich als nachteilig, daß bei der bekannten Strom-/Leistungssteuerung eine Statusbestimmungseinrichtung notwendig ist, die erkennt, ob die Hochdruck-Gasentladungslampe brennt. Als besonders nachteilig erweist sich bei der bekannten Strom-/Leistungssteuerung, daß der erste Kondensator, der die Höhe und die Dauer der der Hochdruck-Gasentladungslampe zuzuführenden Zusatzleistung direkt nach dem Zünden bestimmt, bei ausgeschaltetem Vorschaltgerät entladen wird und bei eingeschaltetem Vorschaltgerät geladen wird, so daß bei dem Auftreten von Restströmen über den ersten Kondensator dieser seinen gewünschten Ladezustand im stationären Betrieb nicht erreicht und somit die Lampennennleistung nicht eingehalten werden kann.

Als besonders nachteilig erweist es sich, daß der Zeitpunkt der Rücknahme der Zusatzleistung durch eine Lampenunabhängige Zeitkonstante bestimmt wird.

Der Erfindung liegt die Aufgabe zugrunde, ein Vorschaltgerät zu schaffen, das einfach und kostengünstig herstellbar ist, mit einer Leistungssteuerung, welche einen optimalen Anlauf und einen stabilen, stationären Betrieb der Lampe garantiert.

Die Aufgabe wird erfindungsgemäß dadurch gelöst, daß der Ausgang der Strom-/Leistungssteuerung über eine Spannungsteileranordnung sowohl mit dem Kondensator als auch mit einer ersten Referenzspannungsquelle verbunden ist und daß der Kondensator bei ausgeschaltetem Vorschaltgerät mit einer zweiten Referenzspannungsquelle verbunden ist und mit der ersten Zeitkonstanten aufgeladen wird, daß nach dem Einschalten des Vorschaltgeräts bei überschreiten einer Lampengrenzspannung, die durch den maximal zulässigen Lampenanlaufstrom und durch die maximal zulässige Lampenanlaufleistung bestimmt ist, der Komparator ein Schaltsignal erzeugt und daß der Kondensator durch das Schaltsignal über einen Widerstand mit Masse verbunden wird und mit der zweiten Zeitkonstanten entladen wird.

Es ist von Vorteil, daß der Ausgang der Strom-/Leistungssteuerung über eine Spannungsteileranordnung sowohl mit dem Kondensator als auch mit einer ersten Referenzspannungsquelle verbunden ist, weil somit sichergestellt wird, daß sowohl bei dem stationären Betrieb der Hochdruck-Gasentladungslampe ein definierter Leistungssollwert an dem Ausgang der Strom-/Leistungssteuerung anliegt, als auch im Anlaufbetrieb an dem Ausgang ein Strom-/Leistungssollwert anliegt, in dessen Abhängigkeit der Hochdruck-Gasentladungslampe eine Zusatzleistung zugeführt wird, die in Abhängigkeit von dem Betriebszustand und dem maximal zulässigen Lampenstrom steht, wobei eine besonders einfach und kostengünstig herstellbare Verknüpfung der Spannungswerte gegeben ist.

Dadurch, daß der Kondensator bei ausgeschaltetem Vorschaltgerät mit einer zweiten Referenzspannungsquelle verbunden ist und mit der ersten Zeitkonstante aufgeladen wird, ist eine einfache und zuverlässige Schaltungsanordnung gegeben, mit der die Ausschaltzeit des Vorschaltgeräts und damit der Hochdruck-Gasentladungslampe gemessen werden kann, wobei die maximale Zusatzleistung durch die Spannung des voll aufgeladenen Kondensators bestimmt ist.

Es ist vorteilhaft, daß nach dem Einschalten des Vorschaltgeräts bei überschreiten einer Lampengrenzspannung, die durch den maximal zulässigen Lampenanlaufstrom sowie durch die maximal zulässige Lampenanlaufleistung bestimmt ist, der Komparator ein Schaltsignal erzeugt und daß der Kondensator durch das Schaltsignal über einen Widerstand mit Masse verbunden wird und mit der zweiten Zeitkonstanten entladen wird, weil somit auf besonders einfache und kostengünstige Weise durch alleinige Messung der Lampenspannung bestimmt wird, ab wann die Zusatzleistung nach dem Starten der Lampe zurückgenommen wird. Durch die Spannung an dem Kondensator wird dabei in einfacher Weise mit geringem Bauteileaufwand die Dauer und die Höhe der zuzuführenden Zusatzleistung bestimmt. Hierbei erweist sich als besonders vorteilhaft, daß der Kondensator im stationären Betrieb entladen ist und nicht wie bei dem bekannten Stand der Technik maximal geladen ist, wo die Spannung des geladenen Kondensators und damit der stationäre Leistungssollwert vom temperaturabhängigen Reststrom durch den Kondensator abhängig ist. Die Kondensatorspannung sinkt hier mit zunehmendem Reststrom, was zu einer Leistungssteigerung der Lampe führt, wodurch die zulässige Lichtleistung überschritten und die Lebensdauer der Lampe erheblich reduziert wird.

Ein im stationären Betrieb weitgehend entladener Kondensator dagegen führt keinen relevanten Reststrom und bleibt entladen. Der stationäre Betrieb ist also unabhängig vom Kondensator. Der Anlaufbetrieb wird in diesem Fall aber durch den Kondensatorreststrom beeinflußt; dieser Reststrom führt speziell bei hohen Betriebstemperaturen zu einer Verringerung der Anlaufleistung (Zusatzleistung) und des maximalen Anlaufstroms, was zu einem langsameren Anlauf der Lampe führt, aber einen positiven Einfluß auf die Lebensdauer der Lampe und des durch die hohe Temperatur belasteten Vorschaltgeräts hat.

Es ist vorteilhaft, daß die zweite Referenzspannungsquelle aus einer Spannungsstabilisierungseinrichtung besteht und aus der Batterie gespeist wird, weil somit auf einfache und kostengünstige Weise bei Schwankungen der Spannung von der Spannungsquelle eine gesteuerte oder geregelte Spannungsstabilisierung erreicht wird, wodurch die Zeitkonstanten zum Laden und Entladen des Kondensators bestmöglich eingehalten werden können und die maximale Ladung des Kondensators sicher erreicht wird.

Eine besonders einfache und kostengünstig herstellbare Ausführungsform ist dann gegeben, wenn die Spannungsstabilisierungseinrichtung eine Z-Diode mit Vorwiderstand ist.

Dadurch, daß die erste Referenzspannungsquelle und die zweite Referenzspannungsquelle identisch sind, ergibt sich eine besonders einfache und zuverlässige Spannungsversorgung der Strom-/Leistungssteuerung.

Es ist von Vorteil, daß der schaltende Komparator einen Ausgang aufweist, der je nach Schaltzustand entweder offen oder mit Masse verbunden ist, weil sich somit eine besonders einfache und kostengünstige Schalteinrichtung zum Umschalten des Lade- und Entladevorgangs des Kondensators ergibt.

Es ist von Vorteil, daß der Kondensator ein Tantalkondensator ist, weil somit sichergestellt wird, daß auch bei hohen Temperaturen in dem Vorschaltgerät, z. B. bei einer lampennahen Anordnung, die gewünschte Lade- und Entladecharakteristik nicht durch zu große Restströme beeinflußt werden.

Durch die Merkmale des Anspruchs 7 ist eine erfindungsgemäße Ausführungsform des Vorschaltgeräts gegeben, die besonders einfach und kostengünstig herstellbar ist und eine bestmögliche Zuverlässigkeit bei dem Betrieb des Vorschaltgeräts gewährleistet.

Es ist besonders vorteilhaft, daß Vorschaltgerät zum Starten und Betreiben von Hochdruck-Gasentladungslampen in Kraftfahrzeugscheinwerfern zu verwenden, da neben der einfachen, kostengünstigen Ausführungsform des Erfindungsgegenstands ein besonders gutes Startverhalten der Hochdruck-Gasentladungslampe gegeben ist, die unabhängig von ihrem Einschaltzustand schnellstmöglich und flackerfrei eine vorgegebene Lichtleistung erzeugt, wodurch die Sicherheit bei dem Betrieb von Kraftfahrzeugen erhöht wird.

Ein Ausführungsbeispiel des Erfindungsgegenstands ist in den Zeichnungen dargestellt und wird im folgenden anhand der Figuren näher beschrieben.

Gleiche oder gleichwirkende Merkmale in den Figuren sind mit gleichen Bezugszeichen versehen.

Es zeigen
Figur 1 ein Blockschaltbild eines erfindungsgemäßen Vorschaltgeräts zum Starten und Betreiben von Hochdruck-Gasentladungslampen,
Figur 2 eine Schaltungsanordnung einer Strom-/Leistungssteuerung eines erfindungsgemäßen Vorschaltgeräts.

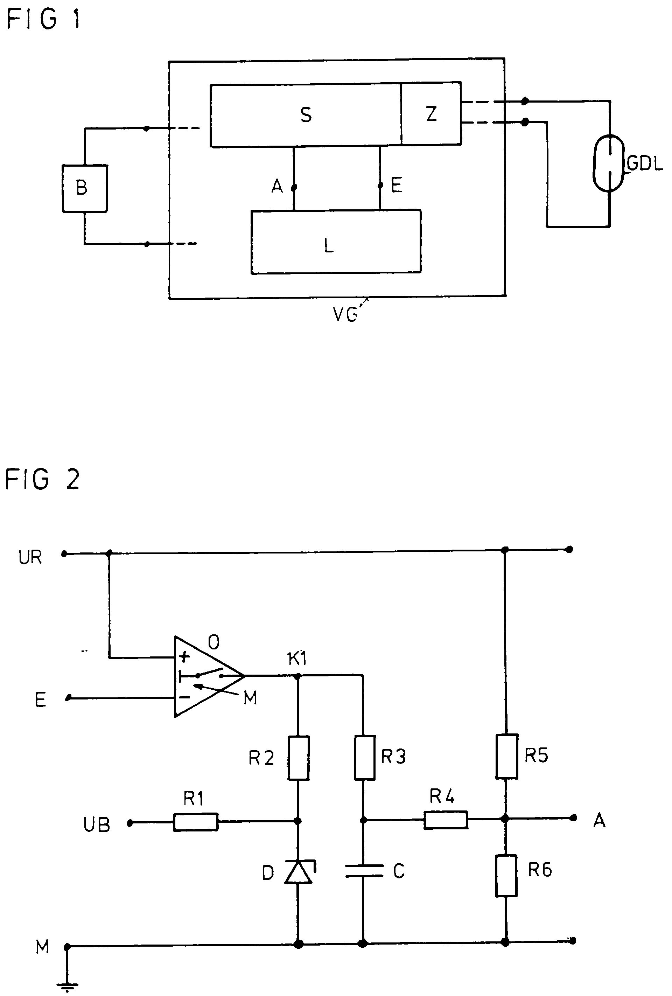

Figur 1 zeigt ein Blockschaltbild eines erfindungsgemäßen Vorschaltgeräts (VG) zum Starten und Betreiben von Hochdruck-Gasentladungslampen (GDL). Das Vorschaltgerät (VG) wird von einer Batterie (B) gespeist, die z. B. die Fahrzeugbatterie eines Kraftfahrzeugs sein kann. Das Vorschaltgerät weist mindestens einen strom- und leistungsgesteuerten Spannungswandler (S) auf, der über eine Zündeinrichtung (Z) mit einer Hochdruck-Gasentladungslampe (GDL) verbunden ist. Bei dem hier gezeigten Ausführungsbeispiel ist die Zündeinrichtung (Z) Teil des Vorschaltgeräts (VG). Bei einem anderen Ausführungsbeispiel kann die Zündeinrichtung (Z) auch gesondert angeordnet sein.

Der mindestens eine strom- und leistungsgeregelte Spannungswandler (S) ist bei dem hier gezeigten Ausführungsbeispiel ein DC/DC-Wandler dem zum Ansteuern einer Wechselstrom-Hochdruck-Gasentladungslampe (GDL) ein hier nicht gezeigter Brückenschalter nachgeordnet ist. Bei einem anderen Ausführungsbeispiel, bei dem eine Gleichstrom-Hochdruck-Gasentladungslampe (GDL) betrieben werden soll, ist ein Nachschalten eines Brückenschalters bzw. Wechselrichters nicht erforderlich.

Unabhängig von der jeweiligen Ausführungsform des mindestens einen strom- und leistungsgeregelten Spannungswandlers (S) ist dieser mit einer Strom-/Leistungssteuerung (L) verbunden. Die Strom-/Leistungssteuerung (L) weist dabei einen Eingang (E) auf, an dem ein der Lampenspannung entsprechendes Eingangssignal anliegt. Die Strom-/Leistungssteuerung (L) weist einen Ausgang (A) auf, über den dem Spannungswandler (S) ein Strom-/Leistungssollwert zugeführt wird. Insbesondere direkt nach dem Zünden der Hochdruckgasentladungslampe (GDL) muß dieser eine erhöhte Leistung, das heißt, eine Zusatzleistung zugeführt werden, damit die Hochdruck-Gasentladungslampe (GDL) möglichst schnell einen stabilen, stationären Brennzustand ohne Flackererscheinungen annimmt.

Zu diesem Zweck weist die Strom-/Leistungssteuerung (L) eine in Figur 2 gezeigte Schaltungsanordnung zum Erzeugen einer Zusatzleistung direkt nach dem Zünden der Hochdruck-Gasentladungslampe (GDL) auf, die in Abhängigkeit von dem Lampenbetriebszustand steht und durch den maximal zulässigen Lampenstrom begrenzt ist.

Die erste Elektrode eines Kondensators (C), dessen Spannung, die Höhe und den zeitlichen Verlauf der der Hochdruck-Gasentladungslampe zuzuführenden Zusatzleistung bestimmt, ist mit Masse (M) verbunden. Die zweite Elektrode des Kondensators (C) ist zum einen über einen vierten Widerstand (R4) mit dem Ausgang (A) und zum anderen über einen dritten Widerstand (R3) mit einer ersten Klemme (K1) verbunden. Die erste Klemme (K1) ist zum einen mit dem Ausgang des Komparators (O) und zum anderen über einen zweiten Widerstand (R2) und einen ersten Widerstand (R1) mit der Spannungsquelle (UB) verbunden, die z. B. die Kraftfahrzeugbatterie sein kann. Die Spannungsquelle (UB) ist über den ersten Widerstand (R1) und eine Z-Diode (D), die mit dem ersten Widerstand (R1) als eine Spannungsstabilisierungseinrichtung dient, mit Masse (M) verbunden. Der invertierende Eingang des Komparators (O) ist mit dem Eingang (E) verbunden, an dem ein der Lampenspannung entsprechendes Eingangssignal anliegt. Der nicht invertierende Eingang des Komparators (O) ist mit einer Referenzspannungsquelle (UR) verbunden. Der Komparator (O) weist bei dem hier gezeigten Ausführungsbeispiel einen Ausgang auf, der je nach dem Schaltzustand des Komparators (O) entweder offen ist oder mit Masse (M) verbunden ist. Der Ausgang (A) ist zum einen über einen sechsten Widerstand (R6) mit Masse (M) und zum anderen über einen fünften Widerstand (R5) mit der Referenzspannungsquelle (UR) verbunden. Der Ausgang (A) ist somit sowohl mit der Referenzspannungsquelle (UR) als auch mit dem Kondensator (C) über eine Spannungsteileranordnung verbunden, die in einfachster Weise die Spannungssignale von der Referenzspannungsquelle (UR) und dem Kondensator (C) verknüpft. Bei einem anderen Ausführungsbeispiel kann die Spannungsstabilisierungseinrichtung (R1 und D) auch eine Spannungsregeleinrichtung sein. Bei einem weiteren Ausführungsbeispiel kann die Spannungsquelle (UB) auch die Referenzspannungsquelle (UR) sein. Der Kondensator (C) kann vorteilhaft ein Tantalkondensator sein, wodurch die Nennwerte des Kondensators (C) auch bei hohen Temperaturen bestmöglich eingehalten werden.

Im folgenden wird die Wirkungsweise des Erfindungsgegenstands entsprechend Figur 2 kurz beschrieben.

Bei ausgeschaltetem Vorschaltgerät wird der Kondensator (C) aus der zweiten Referenzspannungsquelle (R1, D), welche aus der Spannungsquelle (UB) gespeist wird, über den zweiten Widerstand (R2) und den dritten Widerstand (R3) aufgeladen.

Bei der Inbetriebnahme des Vorschaltgeräts (VG) wird die Hochdruck-Gasentladungslampe (GDL) entsprechend Figur 1 durch die von dem mindestens einen Spannungswandler (S) und der Zündeinrichtung (Z) bereitgestellte Spannung gezündet. Ein der Lampenspannung entsprechendes Eingangssignal liegt an dem Eingang (E) der Schaltungsanordnung gemäß Figur 2 an. Dieses Eingangssignal an dem Eingang (E) wird durch den Komparator (O) mit einer Referenzspannung von der Referenzspannungsquelle (UR) verglichen. überschreitet die Lampenspannung eine Lampengrenzspannung, die von dem maximaL zulässigen Lampenanlaufstrom und von der maximal zulässigen Lampenanlaufleistung abhängt, erzeugt der Komparator (O) ein Schaltsignal und verbindet den Kondensator (C) über den dritten Widerstand (R3) mit Masse. Dieser entlädt sich über den dritten Widerstand (R3) mit der zweiten Zeitkonstante. In Abhängigkeit von der ersten Zeitkonstanten, die bestimmt ist durch den zweiten Widerstand (R2) und den dritten Widerstand (R3) und die Kapazität des Kondensators (C), wurde der Kondensator (C) bei abgeschaltetem Vorschaltgerät (VG) je nach der Zeit, über die das Vorschaltgerät (VG) abgeschaltet war, entsprechend einer exponentiellen Funktion auf eine Spannung, die durch die erste und die zweite Referenzspannung sowie durch die Widerstände (R3 bis R6) und der Belastung des Ausgangs (A) bestimmt ist, aufgeladen. Entsprechend der Höhe der Spannung des Kondensators (C) liegt an dem Ausgang (A) ein Strom-/Leistungssollwert an, der eine entsprechend dem Betriebszustand der Hochdruckgasentladungslampe (GDL) vorgegebene Höhe aufweist. Das Signal an dem Ausgang (A) setzt sich dabei zum einen aus dem Spannungssignal, das über den vierten Widerstand (R4) von dem Kondensator (C) anliegt, dem Spannungssignal, das über den fünften Widerstand (R5) von der Referenzspannungsquelle (UR) anliegt und dem Bezugspotential zusammen, welches durch die Verbindung des Ausgangs (A) über den sechsten Widerstand (R6) mit Masse (M) gegeben ist. Durch diese Spannungsteileranordnung wird auf einfache Weise eine Addierschaltung realisiert, die sicherstellt, daß bei dem stationären Betrieb der Hochdruck-Gasentladungslampe (GDL) an dem Ausgang (A) ein entsprechend der Referenzspannung von der ersten Referenzspannungsquelle (UR) vorgegebener Strom-/Leistungssollwert vorliegt, und in der Anlaufphase der Hochdruck-Gasentladungslampe ein Spannungswert aufaddiert wird, der durch die Spannung von dem Kondensator (C) gegeben ist. Aufgrund der Zeitkonstanten zum Laden und Entladen des Kondensators (C) wird sichergestellt, daß der Hochdruck-Gasentladungslampe in Abhängigkeit von der Ausschaltzeit und der Dauer der letzten Einschaltzeit eine dem Betriebszustand angepaßte Zusatzleistung zur Verfügung gestellt wird. Der Zeitpunkt, ab wann die Zusatzleistung zu der normalen Leistung abgebaut wird, erfolgt dabei allein aufgrund der gemessenen Lampenspannung, wodurch sich eine besonders einfache, kostengünstige und zuverlässige Ausführungsform ergibt. Die der Hochdruck-Gasentladungslampe (GDL) zugeführte Zusatzleistung wird aufgrund der zweiten Zeitkonstante mit der der Kondensator (C) entladen wird, kontinuierlich abgebaut.

## Patentansprüche

1. Vorschaltgerät zum Starten und Betreiben von Hochdruck-Gasentladungslampen, das aus einer Batterie (B) gespeist wird, mit mindestens einem strom- und/oder leistungsgeregelten Spannungswandler (S), der über eine Zündeinrichtung (Z) mit einer Hochdruck-Gasentladungslampe (GDL) verbunden ist und der über einen Eingang (E) mit einer Strom-/Leistungssteuerung (L) verbunden ist, an dem ein der Lampenspannung entsprechendes Eingangssignal anliegt, mit einem Ausgang (A) an der Strom-/Leistungssteuerung (L), über den dem Spannungswandler (S) ein Strom-/Leistungssollwert zugeführt wird, mit einem Komparator (O), der in Abhängigkeit von dem Eingangssignal ein Schaltsignal erzeugt und mit einem Kondensator (C), der in Abhängigkeit von dem erzeugten Schaltsignal mit einer ersten Zeitkonstanten geladen oder mit einer zweiten Zeitkonstanten entladen wird, und dessen Spannung die Höhe und die Dauer einer der Hochdruck-Gasentladungslampe (GDL) zugeführten Zusatzleistung nach dem Zünden bestimmt, die von dem Betriebszustand der Hochdruck-Gasentladungslampe (GDL) abhängt und von deren maximal zulässigen Lampenstrom begrenzt ist, dadurch gekennzeichnet, daß der Ausgang (A) der Strom-/Leistungssteuerung (L) über eine Spannungsteileranordnung sowohl mit dem Kondensator (C) als auch mit einer ersten Referenzspannungsquelle (UR) verbunden ist, daß der Kondensator (C) bei ausgeschaltetem Vorschaltgerät mit einer zweiten Referenzspannungsquelle (UB, R1, D) verbunden ist und mit der ersten Zeitkonstanten aufgeladen wird, daß nach dem Einschalten des Vorschaltgeräts (VG) bei überschreiten einer Lampengrenzspannung, die durch den maximal zulässigen Lampenanlaufstrom und durch die maximal zulässige Lampenanlaufleistung bestimmt ist, der Komparator (O) ein Schaltsignal erzeugt, und daß der Kondensator (C) durch das Schaltsignal über einen Widerstand (R3) mit Masse (M) verbunden wird und mit der zweiten Zeitkonstanten entladen wird.

2. Vorschaltgerät nach Anspruch 1, dadurch gekennzeichnet, daß die zweite Referenzspannungsquelle (UB, R1, D) aus einer Spannungsstabilisierungseinrichtung (D) besteht und aus der Batterie (B) gespeist wird.

3. Vorschaltgerät nach Anspruch 2, dadurch gekennzeichnet, daß die Spannungsstabilisierungseinrichtung (D) eine Z-Diode (D) ist und mit einem Vorwiderstand (R1) betrieben wird.

4. Vorschaltgerät nach Anspruch 1, dadurch gekennzeichnet, daß die erste Referenzspannungsquelle (UR) und die zweite Referenzspannungsquelle (UB, R1, D) identisch sind und permanent aus der Batterie (B) gespeist werden.

5. Vorschaltgerät nach Anspruch 1, dadurch gekennzeichnet, daß der schaltende Komparator (O) einen Ausgang aufweist, der je nach dem Schaltzustand entweder offen ist oder mit Masse (M) verbunden ist.

6. Vorschaltgerät nach Anspruch 1, dadurch gekennzeichnet, daß der Kondensator (C) ein Tantalkondensator ist.

7. Vorschaltgerät nach mindestens einem der vorstehenden Ansprüche, dadurch gekennzeichnet, daß die erste Elektrode des Kondensators (C) mit Masse (M) verbunden ist, daß die zweite Elektrode des Kondensators (C) zum einen über einen vierten Widerstand (R4) mit dem Ausgang (A) und zum anderen über einen dritten Widerstand (R3) mit einer ersten Klemme (K1) verbunden ist, daß die erste Klemme (K1) zum einen mit dem Ausgang des Komparators (O) und zum anderen über einen zweiten Widerstand (R2) und einen ersten Widerstand (R1) mit der Spannungsquelle (UB) verbunden ist, daß die Spannungsquelle (UB) über den ersten Widerstand (R1) und eine Z-Diode (D) mit Masse (M) verbunden ist, daß der invertierende Eingang des Komparators (O) mit dem Eingang (E) verbunden ist, daß der nicht invertierende Eingang des Komparators (O) mit der Referenzspannungsquelle (UR) verbunden ist und daß der Ausgang (A) zum einen über einen- sechsten Widerstand (R6) mit Masse (M) und zum anderen über einen fünften Widerstand (R5) mit der Referenzspannungsquelle (UR) verbunden ist.

8. Vorschaltgerät nach mindestens einem der vorstehenden Ansprüche, gekennzeichnet durch die Verwendung als Vorschaltgerät von Hochdruck-Gasentladungslampen in Kraftfahrzeugscheinwerfern.

9. Vorschaltgerät nach mindestens einem der vorstehenden Ansprüche, dadurch gekennzeichnet, daß die Lampengrenzspannung sich aus dem Quotienten von der maximal zulässigen Lampenanlaufleistung und dem maximal zulässigen Lampenanlaufstrom errechnet und beispielhaft 29 Volt beträgt.

## Claims

1. A shunt unit for starting and operating high-pressure gas-discharge lamps, which is supplied from a battery (B), with at least one current and/or output regulated voltage converter (S), which is connected via an ignition unit (Z) to a high-pressure gas-discharge lamp (GDL) and which is connected via an input (E) to a current/output control (L), to which is applied an input signal which corresponds with the lamp voltage, with an output (A) on the current/output control (L) through which a current/output nominal value is delivered to the voltage converter (S), with a comparator (O) which generates in dependence of the input signal a switch signal, and with a capacitor (C) which is charged in dependence of the generated switch signal with a first time constant or discharged with a second time constant, and the voltage of which determines the value and duration of an additional output delivered to the high-pressure gas-discharge lamp (GDL) after ignition which is dependent of the operational state of the high-pressure gas-discharge lamp (GDL) and defined by its maximum admissible lamp current, characterized in that the output (A) of the current/output control (L) is connected via a voltage splitter arrangement to both the capacitor (C) and a first reference voltage source (UR), that the capacitor (C) with the shunt unit switched off is connected to a second reference voltage source (UB, R1, D) and charged with the first time constant, that after switching on the shunt unit (VG) on exceeding a lamp voltage limit, which is determined by the maximum admissible lamp starting current and by the maximum admissible lamp starting output, the comparator (O) generates a switch signal, and that the capacitor (C) is connected via a resistor (R3) to ground and discharged with the second time constant.

2. A shunt unit according to claim 1, **characterized in that** the second reference voltage source (UB, R1, D) is composed of a voltage stabilizing unit (D) and supplied from the battery (B).

3. A shunt unit according to claim 2, **characterized in that** the voltage stabilizing unit (D) is a Z-diode (D) and operated by an input resistor (R1).

4. A shunt unit according to claim 1, **characterized in that** the first reference voltage source (UR) and the second reference voltage source (UB, R1, D) are identical and permanently supplied from the battery (B).

5. A shunt unit according to claim 1, **characterized in that** the switching comparator (O) has an output which is either open or connected to ground (M), depending on the switching state.

6. A shunt unit according to claim 1, **characterized in that** the capacitor (C) is a tantalum capacitor.

7. A shunt unit according to at least one of the above claims, **characterized in that** the first electrode of the capacitor (C) is connected to ground (M), the second electrode of the capacitor (C) is connected, on the one hand, via a fourth resistor (R4) to the output (A) and, on the other hand, via a third resistor (R3) to a first clamp (K1), the first clamp (K1) is connected, on the one hand, to the output of the comparator (O) and, on the other hand, via a second resistor (R2) and a first resistor (R1) to the voltage source (UB), the voltage source (UB) is connected via the first resistor (R1) and a Z-diode (D) to ground (M), the inverting input of the comparator (O) is connected to the input (E), the non-inverting input of the comparator (O) is connected to the reference voltage source (UR), and the output (A) is connected, on the one hand, via a sixth resistor (R6) to ground (M) and, on the other hand, via a fifth resistor (R5) to the reference voltage source (UR).

8. A shunt unit according to at least one of the above claims, **characterized by** its application as a shunt unit for high-pressure gas-discharge lamps in headlamps of motor vehicles.

9. A shunt unit according to at least one of the above claims, **characterized in that** the lamp voltage limit is calculated from the quotient of maximum admissible lamp starting output and maximum admissible lamp starting current and, for example 29 volts.

## Revendications

1. Ballast pour amorcer et faire fonctionner des lampes à décharge électrique haute pression, qui est alimenté à partir d'une batterie (B) et comprend au moins un convertisseur de tension (S) dont le courant et/ou la puissance est ou sont réglés, convertisseur qui est relié à travers un dispositif d'allumage (Z) à une lampe à décharge haute pression (GDL) et à travers une entrée (E) à une commande de courant/puissance (L), à laquelle est appliqué un signal d'entrée correspondant à la tension aux bornes de la lampe, la commande de courant/puissance (L) présentant une sortie (A) par laquelle une valeur de consigne de courant/puissance est appliquée au convertisseur de tension (S) et comportant un comparateur (O) générant un signal de commutation en fonction du signal d'entrée, de même qu'un condensateur (C) qui, en fonction du signal de commutation généré, est chargé avec une première constante de temps ou déchargé avec une seconde constante de temps et dont la tension fixe la grandeur et la durée d'une puissance additionnelle amenée à la lampe à décharge haute pression après l'allumage, la puissance additionnelle dépendant de l'état de fonctionnement de la lampe (GDL) et étant limitée par le courant de lampe maxial admissible, caractérisé en ce que la sortie (A) de la commande de courant/puissance (L) est connectée à travers un dispositif diviseur de tension à la fois au condensateur (C) et à une première source de tension de référence (UR), que le condensateur (C) est connecté à une seconde source de tension de référence (UB, R1, D) et chargé avec la première constante de temps quand le ballast est coupé, qu'à la suite de l'enclenchement du ballast (VG), en cas de dépassement d'une tension limite aux bornes de la lampe, qui est déterminée par le courant de démarrage maximal admissible de la lampe et par la puissance de démarrage maximale admissible de la lampe, le comparateur (O) génère un signal de commutation, et que le signal de commutation a pour conséquence que le condensateur est connecté à travers une résistance (R3) à la masse (M) et déchargé avec la seconde constante de temps.

2. Ballast selon la revendication 1, caractérisé en ce que la seconde source de tension de référence (UB, R1, D) est formée par un dispositif stabilisateur de tension (D) et alimentée à partir de la batterie (B).

3. Ballast selon la revendication 2, caractérisé en ce que le dispositif stabilisateur de tension (D) est une diode Zener (D) et est utilisé avec une résistance série (R1).

4. Ballast selon la revendication 1, caractérisé en ce que la première source de tension de référence (UR) et la seconde source de tension de référence (UB, R1, D) sont identiques et alimentées en permanence à partir de la batterie (B).

5. Ballast selon la revendication 1, caractérisé en ce que le comparateur commutateur (O) présente une sortie qui, suivant l'état de commutation, est soit ouverte soit connectée à la masse (M).

6. Ballast selon la revendication 1, caractérisé en ce que le condensateur (C) est un condensateur au tantale.

7. Ballast selon au moins une des revendications précédentes, caractérisé en ce que la première électrode du condensateur (C) est reliée à la masse (M), que la seconde électrode du condensateur (C) est reliée d'une part à travers une quatrième résistance (R4) à la sortie (A) et d'autre part à travers une troisième résistance (R3) à une première borne (Kl), que la première borne (K1) est reliée d'une part à la sortie du comparateur (O) et d'autre part à travers une deuxième résistance (R2) et une première résistance (R1) à la source de tension (UB), que la source de tension (UB) est reliée à travers la première résistance (R1) et une diode Zener (D) à la masse (M), que l'entrée inverseuse du comparateur (O) est reliée à l'entrée (E), que l'entrée non inverseuse du comparateur (O) est reliée à la source de tension de référence (UR) et que la sortie (A) est reliée d'une part à travers une sixième résistance (R6) à la masse (M) et d'autre part à travers une cinquième résistance (R5) à la source de tension de référence (UR).

8. Ballast selon au moins une des revendications précédentes, caractérisé en ce qu'il est utilisé comme un ballast de lampes à décharge haute pression dans des projecteurs de véhicules automobiles.

9. Ballast selon au moins une des revendications précédentes, caractérisé en ce que la tension limite aux bornes de la lampe est calculée à partir du quotient de la puissance de démarrage maximale admissible de la lampe et du courant de démarrage maximal admissible de la lampe et est par exemple de 29 volts.
